# EUROPÄISCHE PATENTSCHRIFT

(11) **EP 2 395 260 B1**
(45) Veröffentlichungstag und Bekanntmachung des Hinweises auf die Patenterteilung: **13.03.2013**
(21) Anmeldenummer: 10006627.3
(22) Anmeldetag: 25.06.2010
(51) Int. Cl.: F16H 7/08

(54) **Spannsystem mit Rückstellung**
Tensioning system with reset
Système de serrage doté d'un retour

(30) Priorität: 11.06.2010 EP 10006086
(43) Veröffentlichungstag der Anmeldung: 14.12.2011
(73) Patentinhaber: iwis motorsysteme GmbH & Co. KG, 81369 München (DE)
(72) Erfinder: Schmid, Tobias, 86875 Bronnen (DE); Bauer, Christian, 81671 München (DE); Perissinotto, Renzo, 85221 Dachau (DE)
(74) Vertreter: Grünecker, Kinkeldey, Stockmair & Schwanhäusser

(56) Entgegenhaltungen:
- EP-A2- 2 131 066
- DE-C1- 19 680 418
- DE-U1-202007 008 985
- US-A1- 2006 281 595

## Beschreibung

Die vorliegende Erfindung betrifft ein Spannsystem mit Rückstellung zum Spannen eines flexiblen Antriebsmittels, insbesondere einer Antriebskette eines Verbrennungsmotors, bestehend aus einer Spannvorrichtung und einer Rückstelleinrichtung. Die Spannvorrichtung umfasst ein Gehäuse, einen im Gehäuse in Spannrichtung verschiebbar geführten Spannkolben mit einer Rastprofilierung und eine Rastspange zum schrittweisen Nachstellen des Arbeitsbereichs des Spannkolbens, wobei die Rastspange einen Klemmbereich zum Eingriff in die Rastprofilierung am Spannkolben aufweist. Weiter ist am Gehäuse ein Einfahranschlag derart vorgesehen ist, dass bei einem Anschlagen der Rastspange mittels einer Klemmung des Klemmbereichs auf der Rastprofilierung eine weitere Einfahrbewegung des Spannkolbens in das Gehäuse verhindert ist Darüber hinaus betrifft die vorliegende Erfindung eine entsprechende Spannvorrichtung.

Kolbenbetätigte Spannvorrichtungen mit Nachstelleinrichtungen sind im Stand der Technik weit verbreitet und werden beispielsweise bei Steuerkettentrieben in Verbrennungsmotoren eingesetzt. Dabei bildet das Gehäuse zusammen mit einem hohlzylindrischen Spannkolben in der Kolbenbohrung des Gehäuses einen Druckraum aus, der üblicherweise mit einem unter Druck stehenden Hydraulikmittel gefüllt ist und in dem eine Druckfeder angeordnet ist, um den Spannkolben mechanisch vorzuspannen. Häufig weisen die Nachstellfunktionen derartiger Spannvorrichtungen Rastmechanismen auf, die für den Spannkolben eine Blockier- und eine Durchrutschrichtung definieren, wobei ein zu tiefes Einfahren des Spannkolbens in das Gehäuse mittels eines Anschlags verhindert, aber ein Nachstellen des Arbeitsbereichs des Spannkolbens ermöglicht wird. Eine derartige Spannvorrichtung mit einem einfachen Rastmechanismus ist beispielsweise aus der DE 100 14 700 A1 bekannt, bei der der Spannkolben mit einer Sägezahnprofilierung versehen ist, in die durch ein Fensterausschnitt im Gehäuse ein Ratschenblock eingreift. Der freie Arbeitsbereich des Spannkolbens wird bei dieser Spannvorrichtung durch die axiale Bewegungsfreiheit des Ratschenblocks in dem Gehäusefenster begrenzt.

Ein weiteres bekanntes Konzept einer Spannvorrichtung mit Nachstellfunktion wird in der DE 196 80 418 C1 gezeigt. Dabei weist der Spannkolben dieses Hydraulikspanners mehrere umlaufende Rastnuten auf, in die der ringförmige Klemmabschnitt einer Rastspange eingreift. Zur Realisierung der Nachstellfunktion ist am spannseitigen Ende der Kolbenbohrung ein in der Gehäusebohrung eingelassener Anschlagring vorgesehen, während die Blockierung des Spannkolbens mittels einer im Gehäuse ausgebildeten angefasten Anschlagfläche erfolgt. Dazwischen befindet sich ein ausreichender Arbeitsbereich in dem die Spannvorrichtung ihre Dämpfungswirkung entfalten kann. Neben den beiden Klemmabschnitten des ringförmigen Klemmbereichs weist die Rastspange einen U-förmigen Abschnitt sowie zwei Endschenkel auf, die sich jeweils von dem Klemmabschnitt aus radial nach außen erstrecken und die sich im Arbeitsbereich des Spannkolbens in entsprechenden Gehäusefenstern zwischen der unteren Anschlagfläche und dem oberen Anschlagring bewegen. Bei der Nachstellung des Arbeitsbereichs schlägt die Rastspange am oberen Anschlagring an, so dass ein weiter aus dem Gehäuse ausfahrender Spannkolben den ringförmigen Abschnitt der Rastspange radial aufspreizt und die Rastspange in die nächste Rastnut des Spannkolbens schiebt. Schlägt der ringförmige Klemmabschnitt der Rastspange bei einer Einfahrbewegung des Spannkolbens gegen die untere angefaste Anschlagfläche an, so werden die Klemmabschnitte der Rastspange in die jeweilige Rastnut gepresst und die weitere Einfahrbewegung des Spannkolbens in das Gehäuse blockiert. Die Druckschrift DE 20 2007 008 985 U1 beschreibt eine ähnliche Spannvorrichtung mit einem Federringelement, das zwischen dem Gehäuse und dem Spannkolben wirkt und sowohl zum schrittweisen Nachstellen des Arbeitsbereichs des Spannkolbens als auch zur Transportsicherung einsetzbar ist. In einer Ausführungsform weist dieses Federelement einen U-förmigen Abschnitt auf, der durch die Außenwandung des Gehäuses radial nach außen vorsteht, sowie ein sich um den Spannkolben erstreckenden Ringabschnitt mit einer Öffnung auf, von der aus zwei Enden des Federelements nach außen vorstehen.

Die Druckschrift US 2006/281595 A1 (US 7,455,607 B1) beschreibt ein weiteres Spannsystem mit Rückstellung, wobei der in der Kolbenbohrung eines Spannergehäuses axial geführte Spannkolben mit einem umlaufenden Rillenprofil versehen ist auf dem ein Rastring angeordnet ist. Dieser Rastring weist einen im Wesentlichen geschlossenen ringförmigen Klemmbereich auf, mit zwei von dem Ringteil seitlich durch eine Öffnung in dem Gehäuse vorstehenden, sich überkreuzenden Armen. Eine in der Kolbenbohrung des Gehäuses umlaufende breite Nut definiert gegenüber dem am Spannkolben radial vorstehenden Rastring den freien Arbeitsweg des Spannkolbens und bildet jeweils einen oberen und einen unteren Anschlag aus, wobei die untere Anschlagflanke zur Klemmung des Klemmbereichs auf den Rillen des Spannkolbens geneigt ist. Mittels der radial am Gehäuse vorstehenden Arme des Rastrings kann die Klemmwirkung des Rastrings auf dem Spannkolben aufgehoben werden indem die Endabschnitte der Arme an den dafür vorgesehenen Handhaben zusammengedrückt werden, um durch die Aufdehnung des Klemmbereichs ein Rückstellen des Spannkolbens in seine Ausgangsstellung zu ermöglichen, d.h. die Blockierung des Rastrings an dem unteren Anschlag wird durch die von Außen aufgebrachte Aufdehnung des Klemmbereichs verhindert und der Spannkolben lässt sich ohne Widerstand in die Gehäusebohrung einschieben.

Einen anderen hydraulischen Kettenspanner mit einem federbelasteten in einer zurückgezogenen Position fixierbaren Spannkolben zeigt die gattungsgemäβe Druckschrift EP 2 131 066 A1. Dabei ist die Außenwandung des Spannkolbens mit einem wellenartigen Rastprofil versehen, das mit einem runden Rastring zusammenwirkt, der sich in Spannrichtung an einer Schulter in der Kolbenbohrung abstützt und aufweitet, während er bei einer Einfahrbewegung des Kolbens an einer Kegelfläche klemmt und eine weitere Einfahrbewegung des Spannkolbens verhindert. Des Weiteren ist am spannseitigen Ende des Spannkolbens ein Einstellring vorgesehen, der in einer zweistufigen radialen Nut in der Kolbenbohrung des Gehäuses angeordnet ist und über ein Paar Laschen am offenen Ende des Rings zusammengedrückt oder gespreizt werden kann, um eine leichte Montage des Kettenspanners zu ermöglichen.

Spannvorrichtungen mit Nachstelleinrichtungen und einer Begrenzung der Einfahrbewegung eines Spannkolbens in ein Gehäuse bei einer gleichzeitigen Definition des freien Arbeitswegs des Spannkolbens sind in unterschiedlichen Konzepten und Ausführungsformen in der Technik verbreitet und haben sich im Einsatz gut bewährt. Leider ist die Blockierung der Einfahrbewegung des Spannkolbens sowohl bei der Endmontage der Spannsysteme als insbesondere auch bei einer Demontage und einem anschließenden erneuten Einbau der Spannvorrichtung bei der Wartung oder Instandsetzung nachteilig und erzwingt bei einfachen Spannvorrichtungen zum Teil den Ersatz des Spannsystems. Es gibt daher insbesondere für moderne Spannsysteme mit Nachstell- und Blockiereinrichtungen die Anforderung ein Rückstellen des Spannkolbens zu ermöglichen. Da jedoch die Rückstellung des Spannkolbens der Blockierfunktion der Nachstelleinrichtung generell entgegensteht, führt dies für die meisten bekannten Spannvorrichtungen zu einem komplexen Aufbau mit zusätzlichen Bauteilen und einer individuellen Ausgestaltung der notwendigen Komponenten.

Der vorliegenden Erfindung liegt daher die Aufgabe zugrunde, ein Spannsystem mit Rückstellung zum Spannen eines flexiblen Antriebsmittels bereitzustellen, dessen Konstruktion bei einer sicheren Funktion der Nachstelleinrichtung einen möglichst einfachen Aufbau und eine einfache Handhabung einer Rückstelleinrichtung ermöglicht.

Diese Aufgabe wird bei einem gattungsgemäßen Spannsystem mit Rückstellung erfindungsgemäß dadurch gelöst, dass am Gehäuse eine Rückstellaufnahme ausgebildet und die Rückstelleinrichtung ein mit der Spannvorrichtung in Wirkbeziehung bringbares Rückstellelement aufweist, wobei das in der Rückstellaufnahme zwischen Rückstellaufnahme und Rastspange positionierte Rückstellelement das Anschlagen der Rastspange am Einfahranschlag verhindert und das Rückstellelement bei einem Anliegen der Rastspange am Rückstellelement sowie einer weiteren Einfahrbewegung des Spannkolbens in das Gehäuse ein selbsttätiges Aufspreizen des Klemmbereichs und ein Rückstellen des Spannkolbens ermöglicht.

Die erfindungsgemäße Ausgestaltung eines Spannsystems mit Rückstellung ermöglicht mittels dem mit der Rückstellaufnahme der Spannvorrichtung in Wirkbeziehung bringbaren Rückstellelement ein einfaches zerstörungsfreies Rückstellen des Spannkolbens. Hierbei unterbindet die Positionierung des Rückstellelements zwischen der Rückstellaufnahme und Rastspange ein Auflaufen der Rastspange auf den unteren Einfahranschlag, der geneigt, gefast oder konisch ausgeformt sein kann, und verhindert somit auch die Wirkung des Einfahranschlags auf die Rastspange. Der Einfahranschlag kann dabei derart ausgestaltet sein, dass ein Aufspreizen des Klemmbereichs zumindest derart verhindert ist die weitere Einfahrbewegung des Spannkolbens in das Gehäuse zu unterbinden. Bevorzug bewirkt der Einfahranschlag zur Blockierung der Einfahrbewegung des Spannkolbens eine Pressung des Klemmbereichs der Rastspange auf der Rastprofilierung des Spannkolbens. Die Spannvorrichtung ist weiter auch für eine einfache Einbringung des mit der Spannvorrichtung in Wirkbeziehung bringbaren Rückstellelements von außen in die Rückstellaufnahme der Spannvorrichtung ausgeformt.

Das in der Rückstellaufnahme der Spannvorrichtung angeordnete mit der Spannvorrichtung in Wirkbeziehung bringbare Rückstellelement verhindert nicht nur das Anliegen der Rastspange am Einfahranschlag und damit die Klemmung der Klemmabschnitte auf dem Rastprofil, sondern ermöglicht auch die ungehinderte Öffnung des Klemmbereichs der Rastspange am Rückstellelement bei einer weiteren Einfahrbewegung des Spannkolbens. Dabei wird der Klemmbereich in einer Ebene seitlich auseinander bewegt bzw. aufgespreizt, so dass der Spannkolben dann mit seiner Rastprofilierung durch die aufgespreizte Rastspange hindurch rutschen kann. Die Rückstelleinrichtung ermöglicht bei dem erfindungsgemäßen Spannsystem die Rückstellung des Spannkolbens in eine vollständig eingefahrene Stellung in der eine Transportsicherung wieder aktiviert werden kann, um beispielsweise die Spannvorrichtung sicher zu demontieren.

Eine günstige Ausführungsform sieht vor, dass die Rastprofilierung am Spannkolben derart ausgebildet ist, dass beim Rückstellen des Spannkolbens das selbsttätige Aufspreizen des Klemmbereichs möglicht ist. Bei der Aufspreizung des Klemmbereichs durch die Rastprofilierung des Spannkolbens kann auf das bekannte sichere Prinzip zum Nachstellen des Arbeitsbereichs des Spannkolbens zurückgegriffen werden, das neben einer einfachen Funktionalität ohne zusätzliche Bauteile auch eine kostengünstige Lösung darstellt. Beim Rückstellen des Spannkolbens am Rückstellelement wird ein funktional ähnliches Durchrutschen des Spannkolbens durch die Rastspange ausgeführt, in dem durch die weitere Einrückbewegung des Spannkolbens die Klemmabschnitte seitlich auseinander bewegt werden und ein Durchrutschen des Spannkolbens zum Rückstellen des Spannkolbens ermöglichen.

Bevorzugt kann die Rückstellaufnahme eine Auflagefläche und optional einen gegenüber der Auflagefläche vorstehenden Sicherungsvorsprung aufweisen. Neben einem vom Gehäuse ausgebildeten Sicherungsvorsprung kann das Rückstellelement auf der Auflagefläche der Rückstellaufnahme auch durch eine geschickte Anordnung anderer Bauteile der Spannvorrichtung wie beispielsweise der Transportsicherung oder der Rastspange in seiner Position gesichert werden. Die Auflagefläche, die üblicherweise im Wesentlichen senkrecht zur Kolbenachse liegt, ermöglicht eine gute Auflage des Rückstellelements und sichere Ausrichtung für ein Anliegen der Rastspange am Rückstellelement, während der Sicherungsvorsprung das Rückstellelement in seiner Position in der Rückstellaufnahme sichert. Dabei kann ein gegenüber der Außenfläche vorstehender Sicherungsvorsprung im Wesentlichen parallel zur Kolbenachse bzw. der Spannrichtung des Spannkolbens ausgerichtet sein.

Hier schließt die ursprüngliche Seite 5 an. ment in seiner Position in der Rückstellaufnahme sichert. Dabei kann ein gegenüber der Außenfläche vorstehender Sicherungsvorsprung im Wesentlichen parallel zur Kolbenachse bzw. der Spannrichtung des Spannkolbens ausgerichtet sein.

Eine zweckmäßige Ausgestaltung des Spannsystems mit Rückstellung sieht vor, dass das Rückstellelement bolzenförmig und zumindest teilweise komplementär zur Rückstellaufnahme ausgebildet ist. Ein bolzenförmiges Rückstellelement ist eine sehr einfache und gut zu handhabende Form um es von außen in der Rückstellaufnahme einer Spannvorrichtung anzuordnen. Eine zumindest teilweise komplementäre Form insbesondere des Umfangs des Rückstellelements zur Rückstellaufnahme erleichtert nicht nur die Anordnung in der Rückstellaufnahme sondern auch die Positionierung und Sicherung des Rückstellelements in der Rückstellaufnahme. Bevorzugt weist weiter die Spitze des Rückstellelements zumindest eine abschnittsweise konische Form auf, um das Einführen des Rückstellelements in die Rückstellaufnahme der Spannvorrichtung zu erleichtern.

Vorteilhafterweise kann die Rastspange ein sich radial vom Spannkolben nach außen erstreckenden Abschnitt aufweisen, wobei der sich nach außen erstreckende Abschnitt der Rastspange beim Rückstellen des Spannkolbens am Rückstellelement anliegt und bei einer weiteren Einfahrbewegung des Spannkolbens eine Aufspreizung des Klemmbereichs ermöglicht. Das Anliegen eines sich radial vom Spannkolben nach außen erstreckenden Abschnitts der Rastspange am Rückstellelement verhindert ein unbeabsichtigtes Klemmen der Rastspange und damit eine sichere Aufspreizung des Klemmbereichs bei einer weiteren Einfahrbewegung des Spannkolbens. Darüber hinaus verhindert der sich nach außen erstreckende Abschnitt der Rastspange ein Verrutschen oder Verschieben der Bauteile zueinander und ermöglicht eine gute Kräfteaufnahme und Kraftübertragung bei der Aufspreizung des Klemmbereichs durch die Rastprofilierung am Spannkolben.

Eine bevorzugte Ausgestaltung sieht vor, dass der Klemmbereich der Rastspange zwei Klemmabschnitte aufweist und der sich radial nach außen erstreckende Abschnitt zumindest ein Teil eines U-förmigen Abschnitts der Rastspange ist, der die Klemmabschnitte federelastisch verbindet. Die zwei bogenförmigen Klemmabschnitte des ringförmigen Klemmbereichs ermöglichen durch dessen federelastische Verbindung über den U-förmigen Abschnitt der Rastspange eine gute Klemmwirkung auf der Rastprofilierung des Spannkolbens. Diese Konstruktion ermöglicht eine gleichmäßige Öffnung des Klemmbereichs der Rastspange sowohl beim Nachstellen des Arbeitsbereichs des Spannkolbens als auch beim Rückstellen des Spannkolbens. Dabei verbindet der U-förmige Bereich die Klemmabschnitte derart federelastisch miteinander, dass beim seitlichen Auseinanderbewegen der Klemmabschnitte in einer Ebene eine vollständig reversible Aufweitung des Klemmbereichs erfolgt. Zweckmäßigerweise sind die Klemmabschnitte der Rastspange entsprechend der Form des Spannkolbens ausgebildet, so dass sie in Verlängerung der parallelen Schenkel des U-förmigen Teils eng in den Rillen der Rastprofilierung anliegen.

Eine besondere Ausführungsform des Spannsystems mit Rückstellung sieht vor, dass der U-förmige Abschnitt der Rastspange mindestens einen abgewinkelten Teil aufweist und das Gehäuse mindestens einen von der Gehäusewandung vorstehenden Führungsvorsprung aufweist, wobei der Führungsvorsprung den abgewinkelten Teil des U-förmigen Abschnitts der Rastspange im Arbeitsbereich des Spannkolbens axial führt und gegen ein Verdrehen sichert. Dabei ermöglicht der mindestens eine abgewinkelte Teil des U-förmigen Abschnitts eine einfache Ausbildung eines Torsionsbereichs als Teil der federelastischen Verbindung der Klemmabschnitte. Die als Torsionsstäbe ausgebildeten Schenkel des abgewinkelten Teils sind durch den sich radial nach außen erstreckenden Teil des U-förmigen Abschnitts mit den beiden Klemmabschnitten der Rastspange verbunden. Der abgewinkelte Teil des U-förmigen Abschnitts der Rastspange erstreckt sich im Wesentlichen parallel oder in einem kleinen Winkel zur Kolbenachse außerhalb der Gehäusewand. Hierbei ist es unerheblich, ob der tatsächliche Abstand des abgewinkelten Teils zur Gehäusewandung über dem abgewinkelten Bereich gleich ist. Die Interaktion mit dem abgewinkelten Teil der Rastspange ermöglicht dem von der Gehäusewandung vorstehenden Führungsvorsprung eine axiale und radiale Führung der Rastspange im Arbeitsbereich des Spannkolbens. Dabei erfolgt durch die Klemmung des ringförmigen Teils der Rastspange mit den zwei bogenförmigen Klemmabschnitten auf der zugehörigen Rastprofilierung des Kolbens gleichzeitig auch eine entsprechende Führung des Spannkolbens durch die Rastspange.

Eine bevorzugte zumindest teilweise Anordnung des Führungsvorsprungs zwischen den parallelen Schenkeln des abgewinkelten Teils des U-förmigen Abschnitts der Rastspange ermöglicht neben einer guten axialen Führung der Rastspange und des Spannkolbens auch eine gute Sicherung gegen ein radiales Verdrehen bei nur sehr kleinen zulässigen Drehwinkeln. Die axiale Führung und Verdrehsicherung der Rastspange und des Spannkolbens erlaubt es die notwendigen Fensterausschnitte für den Arbeitsbereich des Spannkolbens unabhängig von den sich radial nach außen erstreckenden Abschnitten der Rastspange zu dimensionieren. In einer vorteilhaften Ausgestaltung weist der Führungsvorsprung an seinem rückwärtigen Ende, dem der Spannrichtung des Kolbens entgegengesetzten Ende, einen Anschlag auf, der die axiale Bewegung der Rastspange in der Ausrückrichtung begrenzt, indem der die Schenkel des abgewinkelten Teils verbindende Steg des U-förmigen Abschnitts der Rastspange gegen diesen Anschlag stößt. Dabei kann im Gehäuse oberhalb des Führungsvorsprungs, d.h. am spannseitigen Ende des Führungsvorsprungs die Rückstellaufnahme zum Aufnehmen des Rückstellelements ausgebildet sein. Da hierbei der abgewinkelte Teil des U-förmigen Abschnitts ein Verlieren des Rückstellelements aus der Aufnahme verhindert, kann auf eine zusätzliche Sicherung durch einen gegenüber der Auflagefläche vorstehenden Vorsprung verzichtet werden.

In einer weiteren Ausbildung weist die Rastspange einen zweiten U-förmigen Abschnitt mit einem abgewinkelten Teil auf, wobei die beiden U-förmigen Abschnitte an gegenüberliegenden Seiten des ringförmigen Klemmbereichs angeordnet sind und zwei von der Gehäusewandung vorstehende Führungsvorsprünge die abgewinkelten Teile der U-förmigen Abschnitte im Arbeitsbereich des Spannkolbens axial führen und die Rastspange gegen ein Verdrehen sichern. Die gegenüberliegende Anordnung der zwei U-förmigen Abschnitte mit jeweils einen abgewinkelten Teil ermöglicht eine gleichmäßige Verteilung der auftretenden axialen Belastung der Rastspange und führt dadurch zu einer Reduzierung des Verschleißrisikos sowie der Gefahr des Verkanten des Spannkolbens. Darüber hinaus kann die axiale Bewegung der Rastspange in der Ausrückbewegung durch ein Anliegen der Stege der U-förmigen Abschnitte an den rückwärtigen Nachstellanschlägen der Führungsvorsprünge begrenzt werden und so auf zusätzliche Anschläge verzichtet werden.

Für eine kostengünstige und stabile Ausführung der Rastspange kann diese aus einem Runddraht hergestellt sein. Neben dem relativ günstigen Materialpreis für Runddraht lässt sich Runddraht auch einfach bearbeiten und erreicht eine gute Formstabilität bei hohen Festigkeitseigenschaften.

Eine zweckmäßige Ausführungsform sieht vor, dass die Rastprofilierung am Spannkolben als Rillenprofil mit mehreren Rillen, bevorzugt mit umlaufenden Rastrillen, ausgebildet ist. Die übereinander am Spannkolben angeordneten Rastrillen ermöglichen einen einfachen wirkungsvollen Aufbau des Rastprofils. Für eine feine Abstufung der Nachstellung des Arbeitsbereichs des Spannkolbens kann der Abstand der Rastrillen am Spannkolben kleiner als der doppelte Durchmesser der Rastrillen sein. Um den Klemmbereich der Rastspange beim Nachstellen und Rückstellen des Spannkolbens durch die Ausrück- oder Einrückbewegung des Spannkolbens aufzuspreizen, und so ein Überrutschen des Spannkolbens zu ermöglichen, weisen die Rastrillen beidseitig geneigte Flanken auf, die sich geneigt zur Spannrichtung bzw. zum Boden der Rillen erstrecken. Für ein gleichmäßiges Aufspreizen beim Nachstellen des Arbeitsbereichs und beim Rückstellen des Spannkolbens sind die Flanken symmetrisch zu den Rillennuten ausgebildet. In einer besonderen Variante sind die Rastrillen kreisabschnittsförmig ausgeformt.

Eine weitere Ausbildung des Spannsystems sieht vor, dass eine Transportsicherung mit einem Sicherungsbolzen vorgesehen ist, wobei am Gehäuse mindestens eine Bolzenaufnahme vorhanden ist, in der der Sicherungsbolzen aufnehmbar ist, um den Spannkolben in einer Transportstellung zu halten. Der in der Bolzenaufnahme eingesetzte Sicherungsbolzen verhindert beim Transport und der Endmontage des Spannsystems ein unbeabsichtigtes Ausrücken des Spannkolbens. Aus Vereinfachungsgründen kann der Sicherungsbolzen gleichfalls als Rückstellelement einsetzbar sein. Dadurch wird ein zusätzliches spezielles Rückstellelement eingespart. Hierbei ist es lediglich notwendig, die Rückstellaufnahme entsprechend der Form und dem Durchmesser des Sicherungsbolzens auszubilden, bzw. die Aufnahme des Sicherungsbolzens in der Rückstellaufnahme zu ermöglichen.

Die vorliegende Erfindung bezieht sich weiter auf eine Spannvorrichtung zum Spannen eines flexiblen Antriebsmittels mit einem Gehäuse, einem im Gehäuse verschiebbar geführten Spannkolben mit einer Rastprofilierung sowie einer Rastspange zum schrittweisen Nachstellen des Arbeitsbereichs des Spannkolbens, wobei die Rastspange einen Klemmbereich zum Eingriff in die Rastprofilierung am Spannkolben aufweist und am Gehäuse ein Einfahranschlag derart vorgesehen ist, dass bei einem Anschlagen der Rastspange mittels einer Klemmung des Klemmbereichs auf der Rastprofilierung eine weitere Einfahrbewegung des Spannkolbens in das Gehäuse verhindert ist, und wobei die Spannvorrichtung eine Rückstellaufnahme zum Aufnehmen eines Rückstellelements derart aufweist, dass bei einem Anliegen der Rastspange am Rückstellelement sowie einer weiteren Einfahrbewegung des Spannkolbens in das Gehäuse ein selbsttätiges Aufspreizen des Klemmbereichs und ein Rückstellen des Spannkolbens ermöglicht ist. Die Rückstellaufnahme ermöglicht die Anordnung eines mit der Spannvorrichtung in Wirkbeziehung bringbares Rückstellelements, um ein Auflaufen der Rastspange auf den unteren Einfahranschlag zu verhindern und eine Aufspreizung des Klemmbereichs der Rastspange zu ermöglichen. Dabei ist die Rückstellaufnahme derart ausgebildet, dass sie eine Einbringung eines separaten Rückstellelements von außen sowie dessen Aufnahme ermöglicht. Die weiteren Ausgestaltungen der erfindungsgemäßen Spannvorrichtung entsprechen den Variationen der Spannvorrichtung des oben beschriebenen Spannsystems mit Rückstellung.

Im folgenden wird ein Ausführungsbeispiel der vorliegenden Erfindung anhand einer Zeichnung näher erläutert. Es zeigen:
- Fig. 1: eine perspektivische Ansicht eines erfindungsgemäßen Spannsystems mit Rückstellung;
- Fig. 2a: eine perspektivische Teilansicht des Spannsystems aus Fig. 1 mit der Nachstelleinrichtung in einem ausgefahrenen Zustand;
- Fig. 2b: eine perspektivische Teilansicht des Spannsystems aus Fig. 1 mit der Nachstelleinrichtung in einem eingefahrenen Zustand;
- Fig. 3: eine Schnittansicht eines Teils des Spannsystems aus Fig. 2b;
- Fig. 4a: eine teilweise freigeschnittene perspektivische Teilansicht des Spannsystems aus Fig. 1 mit der Anordnung des Rückstellelements in der Rückstellaufnahme der Spannvorrichtung; und
- Fig. 4b: eine teilweise freigeschnittene Teilseitenansicht des Spannsystems aus Fig. 4a mit einem rückgestellten Spannkolben.

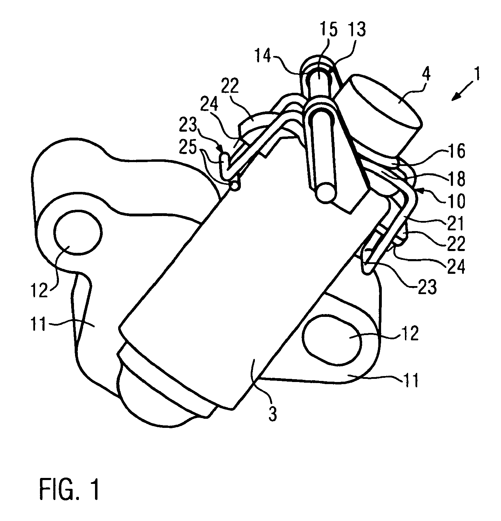

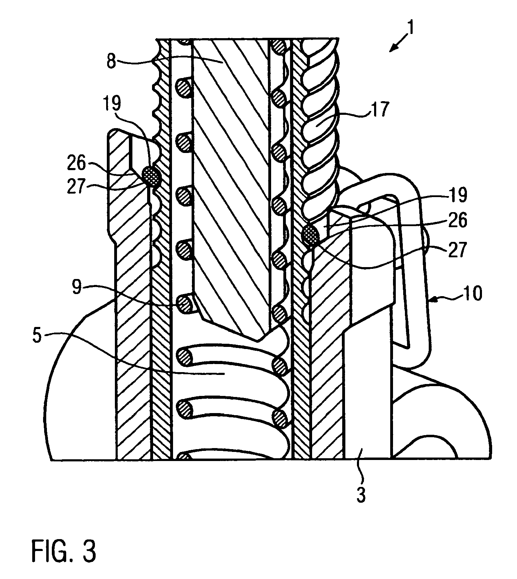

Die Figuren 1 bis 4 zeigen eine bevorzugte Ausführungsform eines erfindungsgemäßen Spannsystems mit Rückstellung mit einer Spannvorrichtung 1 und einer Rückstelleinrichtung 2. Die Spannvorrichtung 1 zum Spannen eines flexiblen Antriebsmittels umfasst ein hohlzylindrisches Gehäuse 3, in dem ein ebenfalls hohlzylindrischer Spannkolben 4 längsbeweglich geführt ist. Das hohlzylindrische Gehäuse 3 und der Spannkolben 4 bilden gemeinsam einen Druckraum 5 aus. Dabei ist im oberen Teil des hohlzylindrischen Spannkolbens 4 ein Füllkörper 8 vorgesehen, der das Volumen des Druckraums 5 begrenzt. Der Spannkolben 4 ist mit einer schraubenförmigen Druckfeder 9 in axialer Richtung vorgespannt und drückt in Richtung der Achse des Spannkolbens 4 gegen ein nicht dargestelltes flexibles Antriebsmittel, insbesondere eine Antriebskette eines Verbrennungsmotors. Zur Entlüftung des Druckraums 5 und Bereitstellen eines Leckagestroms des Hydraulikmittels ist an der Stirnseite des Spannkolbens 4 eine Entlüftungsbohrung vorgesehen.

Das hier gezeigte Gehäuse 3 der Spannvorrichtung 1 ist als Flanschgehäuse ausgeführt mit seitlichen Montageflanschen 11 und Bolzenlöchern 12 zur Befestigung der Spannvorrichtung 1 an einem Motorblock. Darüber hinaus ist auch eine Ausgestaltung des Gehäuses 3 als Einschraubgehäuse möglich, bei dem der zylindrische Gehäusekörper dann mit einem Außengewinde versehen ist.

An dem in Spannrichtung vorderen Ende des Gehäuses 3 ist weiter eine Transportsicherung 13 vorgesehen, bestehend aus zwei an Vorsprüngen des Gehäuses 3 ausgebildeten Sicherungsösen 14 und einem entfernbaren Sicherungsbolzen 15, der zur Fixierung des Spannkolbens 4 in einer Transportstellung mit einem Sicherungsvorsprung 16 am Spannkolben 4 zusammenwirkt und dabei den Spannkolben 4 in einer vollständig eingefahrenen Stellung im Gehäuse 3 fixiert hält. Hierbei ist der in den Sicherungsösen 14 geführte und gehaltene Sicherungsbolzen 15 oberhalb des Sicherungsvorsprungs 16 so gegenüber dem Spannkolben 4 angeordnet, dass der Sicherungsbolzen 15 sich mit dem Sicherungsvorsprung 16 überdeckt und ein Ausrücken des Spannkolbens 4 aus dem Gehäuse 3 verhindert.

Die Nachstelleinrichtung 6 der Spannvorrichtung 1 umfasst eine Rastprofilierung 7 am Spannkolben 4 mit mehreren im Querschnitt kreisabschnittförmigen Ringnuten 17 und eine Rastspange 10, die in diese Ringnuten 17 am Spannkolben 4 eingreift. Die Ringnuten 17 der Rastprofilierung 7 sind übereinander an dem in Spannrichtung vorderen Ende des Spannkolbens 4 ausgebildet und beginnen direkt unterhalb des Sicherungsvorsprungs 16. Dabei greifen die bogenförmigen Klemmabschnitte 19 des Klemmbereichs 18 der Rastspange 10 in die Ringnuten 17 am Spannkolben 4 ein und fixieren den Spannkolben 4 durch die Vorspannkraft des Klemmbereichs 18 der Rastspange 10. Die Rastspange 10 weist angrenzend an die bogenförmigen Abschnitte 19 des Klemmbereichs 18 zwei an gegenüberliegenden Seiten des Klemmbereichs 18 angeordnete U-förmige Abschnitte 20 auf. Dabei erstreckt sich jeder U-förmige Abschnitt 20 zunächst ausgehend von den in den Ringnuten 17 des Spannkolbens 4 positionierten bogenförmigen Abschnitten 19 radial nach außen und mündet dann in einen abgewinkelten Teil 21, dessen zwei Schenkel sich im Wesentlichen parallel oder mit einer geringen Neigung zur Gehäusewandung des hohlzylindrischen Gehäuses 3 erstrecken und jeweils von einem von der Gehäusewandung des Gehäuses 3 vorstehenden Führungsvorsprung 22 axial geführt werden. Hierbei sind die in Verlängerung der kreisabschnittsförmigen Schenkel des ringförmigen Klemmbereichs 18 verlaufenden parallelen Schenkel der U-förmigen Abschnitte 20 im abgewinkelten Teil 21 jeweils auf einer Seite der Führungsvorsprünge 22 angeordnet, so dass der abgewinkelte Teil 21 des U-förmigen Abschnitts 20 den Führungsvorsprung 22 an drei Seiten umgibt. Der Führungsvorsprung 22 ist in dieser Ausführungsform als abgeschrägte Nase ausgebildet, die an dem in Spannrichtung liegenden Ende abgeflacht ist und die an dem in Spannrichtung gegenüberliegenden Ende einen Nachstellanschlag 24 für die Rastspange 10 ausbildet. Die abgewinkelten Teile 21 der U-förmigen Abschnitte 20 der Rastspange 10 sind in dieser Ausführungsform leicht geneigt zur Wandung des Gehäuses 3 ausgebildet, wodurch sich der Abstand zum Gehäuse 3 über die Länge der abgewinkelten Teile 21 verändert. Dabei beträgt der Winkel zwischen den sich radial nach außen erstreckenden Teilen der U-förmigen Abschnitte 20 und seinen abgewinkelten Teilen 21 etwa 90° bis 100°. Da sich die Stege 23 an den unteren Enden der U-förmigen Abschnitte 20 der Rastspange 10 durch die leichte Neigung der abgewinkelten Teile 21 zur Gehäusewandung in einem gewissen Abstand zur Wandung des Gehäuses 3 befinden, stehen die Führungsvorsprünge 22 entsprechend weit gegenüber der Gehäusewandung vor, um einen ausreichenden Nachstellanschlag 24 auszubilden.

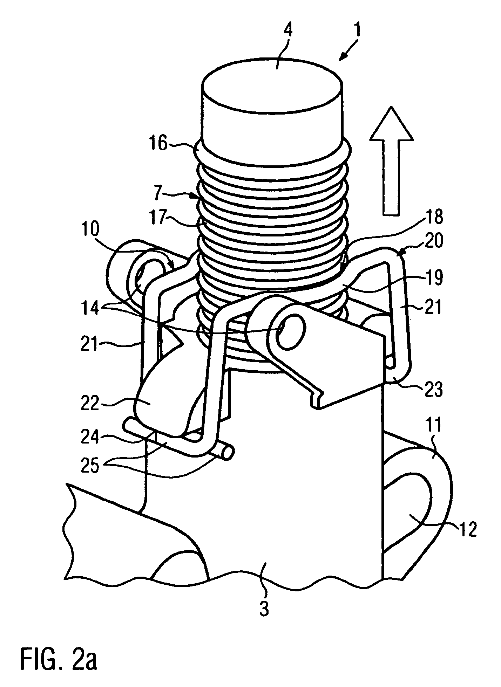

In Fig. 1 ist die Spannvorrichtung 1 in einer Transportsicherungsstellung dargestellt, in der die Ausrückbewegung des Spannkolbens 4 durch den Sicherungsbolzen 15 blockiert ist, da der von den Sicherungsösen 14 gehaltene Sicherungsbolzen 15 sich mit dem Sicherungsvorsprung 16 am Spannkolben 4 überdeckt. Die Transportsicherung 13 wird durch das Entfernen des Sicherungsbolzens 15 aus den Sicherungsösen 14 deaktiviert, wobei die Spannvorrichtung 1 in eine Betriebsstellung überführt wird, indem wie in Fig. 2a gezeigt der Spannkolben 4 aus dem Gehäuse 3 ausrückt, bis er in einer Spannposition ist. Bei diesem Vorgang liegt die Rastspange 10 bei einer anhaltenden Ausrückbewegung des Spannkolbens 4 an den Nachstellanschlägen 24 der Führungsvorsprünge 22 an und die bogenförmigen Klemmabschnitte 19 des Klemmbereichs 18 der Rastspange 10 werden durch die ansteigenden Flanken der kreisabschnittsförmigen Ringnuten 17 auf dem Spannkolben 4 gegen die Vorspannung des Klemmbereichs 18 auseinander gespreizt, so dass der Spannkolben 4 durch die Rastspange 10 hindurchrutschen kann, bis die Rastspange 10 in der nächsten Ringnut 17 wieder einrastet.

Bei der Inbetriebnahme erfolgt wie in Fig. 2a zu sehen, dieser Nachstellschritt mehrfach bis der Spannkolben 4 an einem nicht gezeigten Spannmittel anliegt, während eine Nachstellung des Arbeitsbereichs des Spannkolbens 4 im Betrieb, bedingt durch einen Verschleiß von Antriebskomponenten bzw. einer Längung des Antriebsmittels üblicherweise nur in die jeweils folgende Ringnut 17 der Rastprofilierung 7 erfolgt. Beim Nachstellen des Arbeitsbereichs des Spannkolbens 4 ermöglichen die durch den geschlossenen U-förmigen Abschnitt 20 federelastisch miteinander verbundene Klemmabschnitte 19 eine reversible radiale gerichtete Öffnung des Klemmbereichs 18. Ein wesentlicher Teil der zwischen den bogenförmigen Klemmabschnitten 19 auftretenden Biegung wird dabei durch die Torsion der abgewinkelten Schenkel 21 des geschlossenen U-förmigen Abschnitts 20 bereitgestellt, wodurch der eigentliche Biegeanteil des U-förmigen Abschnitts 20 gering gehalten und eine plastische Verformung verhindert wird.

Für diese Aufspreizung der bogenförmigen Klemmabschnitte 19 des Klemmbereichs 18 der Rastspange 10 bei einem Anschlag der unteren Stege 23 der U-förmigen Abschnitte 20 an den Nachstellanschlägen 24 der Führungsvorsprünge 22 weist einer der U-förmigen Schenkeln 20 der Rastspange 10 an seinem unteren Ende des abgewinkelten Teils 21 einen Steg 23 aus zwei sich überlappenden freien Enden 25 auf, die bei einer fortgesetzten Ausrückbewegung des Spannkolbens 4 durch eine Relativbewegung zueinander ein Aufspreizen des ringförmigen Klemmbereichs 19 der Rastspange 10 ermöglichen. Bedingt durch die Überlappung der freien Enden 25 ist dabei die Neigung der einzelnen Schenkel des zugehörigen abgewinkelten Teils 21 unterschiedlich, da die freien Enden 25 für einen sicheren Anschlag der Rastspange 10 an den Nachstellanschlägen 24 und für ein gleichmäßiges Auseinanderspreizen der bogenförmigen Klemmabschnitte 19 der Rastspange 10 gleichzeitig an dem Nachstellanschlag 24 des zugeordneten Führungsvorsprungs 22 anschlagen müssen.

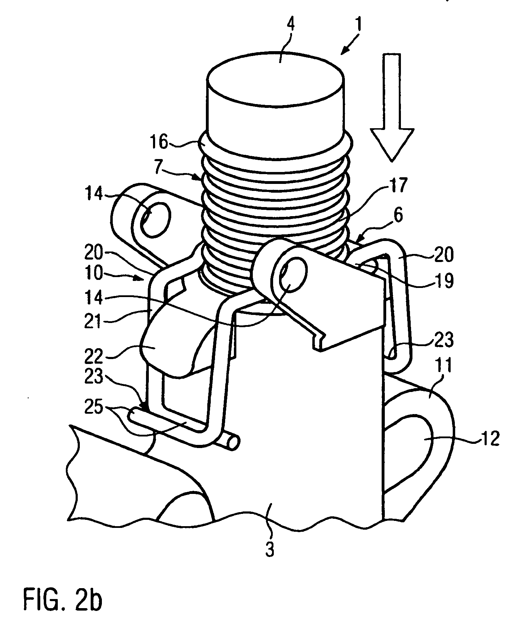

Bei der in Fig. 2b dargestellten starken Einrückbewegung des Spannkolbens 4 in das hohlzylindrische Gehäuse 3, beispielsweise bei einem nicht ausreichenden Hydraulikdruck im Druckraum 5 stößt die Rastspange 10 gegen den am spannseitigen Ende des Gehäuses 3 vorgesehenen Einfahranschlag 26. Dieser Einfahr- oder Blockieranschlag 26 ist mit einer innen liegenden Fase 27 versehen, in die sich der ringförmige Klemmbereich 18 der Rastspange 10 einlegt, so dass bei einer fortgesetzten Einfahrbewegung des Spannkolbens 4 in das Gehäuse 3 die U-förmigen Klemmabschnitte 19 der Rastspange 10 in die derzeit mit dem Klemmbereich 18 in Eingriff stehende Ringnut 17 der Rastprofilierung 7 des Spannkolbens 4 eingepresst werden und ein weiteres Einfahren des Spannkolbens 4 in das Gehäuse 3 sicher blockiert wird. Dabei erstreckt sich der Blockieranschlag 26 am stirnseitigen Ende des Gehäuses 3 nur über den Bereich der beiden Klemmabschnitte 19 des Klemmbereichs 18 der geführten Rastspange 10. Demgegenüber ist der den U-förmigen Schenkeln 20 zugeordnete Bereich des spannseitigen Endes des Gehäuses 3 freigeschnitten um einen negativen Einfluss auf die Klemm- und Blockierwirkung des Klemmbereichs 18 am Blockieranschlag 26 zu vermeiden.

Zwischen den in den Figuren 2a und 2b dargestellten Betriebssituationen, dem Anschlag der Rastspange 10 an den Nachstellanschlägen 24 der Führungsvorsprünge 22 sowie dem Anschlag der Rastspange 10 an dem stirnseitigen Blockieranschlag 26 des Gehäuses 3, ist der dynamische Betriebsbereich der Spannvorrichtung 1 definiert in dem der Spannkolben 4 über diesen freien Arbeitsweg hydraulisch gedämpft ist. Dabei wird der Spannkolben 4 über die in der Rastprofilierung 7 durch die bogenförmigen Klemmabschnitte 19 fixierte Rastspange 10 axial geführt und gegen ein Verdrehen gesichert. Durch die Vermeidung der unkontrollierten Einrückbewegung des Spannkolbens 4 mittels des Festlegens der Rastspange 10 am Blockieranschlag 26 wird das Durchschlagen von auftretenden Kraftspitzen verhindert, beispielsweise beim Startvorgang eines Verbrennungsmotors. So wird auch ein Überspringen eines zugehörigen Antriebsmittels auf den jeweiligen Antriebsrädern sicher vermieden, insbesondere wenn der Druckraum 5 der Spannvorrichtung 1 noch nicht vollständig mit einem Hydraulikmittel gefüllt ist.

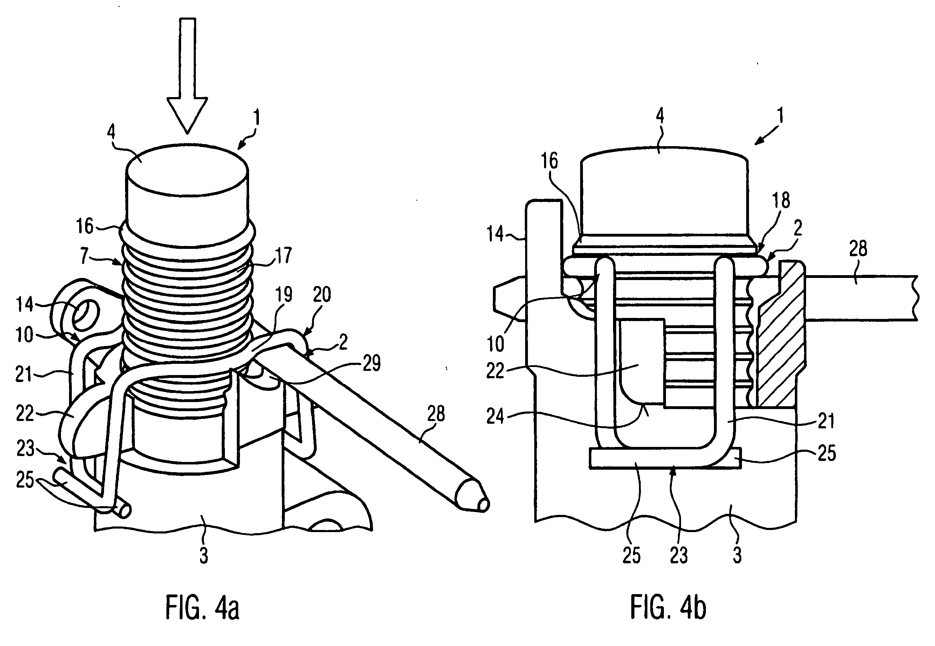

Die Figuren 4a und 4b zeigen die Rückstellung des Spannkolbens 4 der Spannvorrichtung 1 in einem erfindungsgemäßen Spannsystem mit Rückstellung. Es wird zunächst wie in Fig. 4a gezeigt, ein Rückstellelement 28 zwischen der Rückstellaufnahme 29 am Gehäuse 3 oberhalb des Führungsvorsprungs 22 und der Rastspange 10 positioniert. Dazu muss der Spannkolben 4 sich in seinem dynamischen Betriebsbereich befinden, so dass die Rastspange 10 nicht am Einfahr- oder Blockieranschlag 26 anliegt. Je nach Lage der Rückstellaufnahme 29 kann bereits ein kleiner Abstand zwischen der Rastspange 10 und dem Blockieranschlag 26 ausreichen, um das Rückstellelement 28 zwischen der Rückstellaufnahme 29 und der Rastspange 10 einzufügen und die Rückstelleinrichtung 2 zu aktivieren. Um das Einschieben des Rückstellelements 28 zu erleichtern, kann die Spitze des Rückstellelements 28 angefast, spitz oder konisch ausgebildet sein.

Das in der Rückstellaufnahme 29 positionierte Rückstellelement 28 verhindert bei einer Einrückbewegung des Spannkolbens 4 durch manuellen Druck oder eine mechanische Krafteinleitung ein Auftreffen der Rastspange 10 auf den Blockieranschlag 26, sondern fixiert die Rastspange 10 in einer Position in einem Abstand zum Blockieranschlag 26, so dass die Klemmabschnitte 19 des Klemmbereichs 18 der Rastspange 10 nicht in die Ringnuten 17 der Rastprofilierung 7 eingepresst werden. Bei einer weiteren Einrückbewegung des Spannkolbens 4 werden die bogenförmigen Klemmabschnitte 19 der Rastspange 10 durch die ansteigenden Flanken der kreisabschnittsförmigen Ringnuten 17 auf dem Spannkolben 4 auseinander gespreizt, wobei sich auch hier die freien Enden 25 des Stegs 23 des freien U-förmigen Schenkels 20 der Rastspange 10 nach außen bewegen, um das Aufspreizen des Klemmbereichs 18 zu ermöglichen. Die federelastische Aufspreizung des ringförmigen Klemmbereichs 18 der Rastspange 10 durch die elastische Biegung des geschlossenen U-förmigen Abschnitts 20 erlaubt das Hindurchrutschen des Spannkolbens 4 durch die Rastspange 10 in die in der Kraftrichtung jeweils nächsten Ringnut 17 bis hin zum Sicherungsvorsprung 16 der Transportsicherung 13 und damit ein vollständiges Rückstellen des Spannkolbens 4 in seine Transport- und Montagestellung, siehe Fig. 4b.

Wenn mithilfe der Rückstelleinrichtung 2 die Rastspange 10 wieder in die erste Ringnut 17 der Rastprofilierung 7 am Spannkolben 4 unterhalb des Sicherungsvorsprungs 16 zurückgestellt wurde, kann der Spannkolben 4 in dieser in das Gehäuse 3 eingefahrenen Position durch Handkraft oder eine mechanische Fixierung gehalten werden, um das Rückstellelement 28 wieder aus der Rückstellaufnahme 29 zu entfernen. Da hierbei ohne einem Betriebsdruck des Hydraulikmittels im Druckraum 5 nur die Federkraft der Druckfeder 9 gehalten bzw. überwunden werden muss kann hierzu im Normalfall die manuelle Finger- oder Handkraft des Monteurs ausreichen. Danach kann der Sicherungsbolzen 15 der Transportsicherung 13 durch die am Gehäuse 3 ausgebildeten Sicherungsösen 14 hindurch geschoben werden um sich mit dem Sicherungsvorsprung 16 am Spannkolben 4 zu überdecken. Möglicherweise muss dazu der Spannkolben 4 zusammen mit der Rastspange 10 noch etwas tiefer in das Gehäuse 3 eingeschoben werden, um den Sicherungsbolzen 15 am Sicherungsvorsprung 16 vorbei in die Transportstellung zu bringen. Da das Rückstellelement 28 üblicherweise vor dem Einfügen des Sicherungsbolzens 15 aus der Rückstellaufnahme 29 entfernt werden muss, um den Spannkolben 4 zusammen mit der Rastspange 10 in die Transportstellung, d.h. in Anlage mit dem Blockieranschlag 28, zu bringen, kann der Sicherungsbolzen 15 ohne Nachteile ebenfalls als Rückstellelement 28 verwendet werden.

## Patentansprüche

1. Spannsystem mit Rückstellung zum Spannen eines flexiblen Antriebsmittels, insbesondere eine Antriebskette eines Verbrennungsmotors, bestehend aus einer Spannvorrichtung (1) und einer Rückstelleinrichtung (2), die Spannvorrichtung (1) umfasst ein Gehäuse (3), einen im Gehäuse (3) in Spannrichtung verschiebbar geführten Spannkolben (4) mit einer Rastprofilierung (7) und eine Rastspange (10) zum schrittweisen Nachstellen des Arbeitsbereichs des Spannkolbens (4), wobei die Rastspange (10) einen Klemmbereich (18) zum Eingriff in die Rastprofilierung (7) am Spannkolben (4) aufweist, und wobei am Gehäuse (3) ein Einfahranschlag (26) derart vorgesehen ist, dass bei einem Anschlagen der Rastspange (10) mittels einer Klemmung des Klemmbereichs (18) auf der Rastprofilierung (7) eine weitere Einfahrbewegung des Spannkolbens (4) in das Gehäuse (3) verhindert ist,
**dadurch gekennzeichnet, dass** am Gehäuse (3) der Spannvorrichtung (1) eine Rückstellaufnahme (29) ausgebildet ist und die Rückstelleinrichtung (2) ein mit der Spannvorrichtung (1) in Wirkbeziehung bringbares Rückstellelement (28) aufweist, wobei das in der Rückstellaufnahme (29) zwischen Rückstellaufnahme (29) und Rastspange (10) positionierte Rückstellelement (28) das Anschlagen der Rastspange (10) am Einfahranschlag (26) verhindert und das Rückstellelement (28) bei einem Anliegen der Rastspange (10) am Rückstellelement (28) sowie einer weiteren Einfahrbewegung des Spannkolbens (4) in das Gehäuse (3) ein selbsttätiges Aufspreizen des Klemmbereichs (18) und ein Rückstellen des Spannkolbens (4) ermöglicht.

2. Spannsystem nach Anspruch 1,
**dadurch gekennzeichnet, dass** die Rastprofilierung (7) am Spannkolben (4) derart ausgebildet ist, dass beim Rückstellen des Spannkolbens (4) das selbsttätige Aufspreizen des Klemmbereichs (18) ermöglicht ist.

3. Spannsystem nach Anspruch 1 oder 2,
**dadurch gekennzeichnet, dass** die Rückstellaufnahme (29) eine Auflagefläche und einen gegenüber der Auflagefläche vorstehenden Sicherungsvorsprung aufweist.

4. Spannsystem nach einem der Ansprüche 1 bis 3,
**dadurch gekennzeichnet, dass** das Rückstellelement (28) bolzenförmig und zumindest teilweise komplementär zur Rückstellaufnahme (29) ausgebildet ist.

5. Spannsystem nach einem der Ansprüche 1 bis 4,
**dadurch gekennzeichnet, dass** die Rastspange (10) ein sich radial vom Spannkolben (4) nach außen erstreckenden Abschnitt aufweist, wobei der sich nach außen erstreckende Abschnitt der Rastspange (10) beim Rückstellen des Spannkolbens (4) am Rückstellelement (28) anliegt und bei einer weiteren Einfahrbewegung des Spannkolbens (4) eine Aufspreizung des Klemmbereichs (18) ermöglicht.

6. Spannsystem nach Anspruch 5,
**dadurch gekennzeichnet, dass** der Klemmbereich (18) der Rastspange (10) zwei Klemmabschnitte (19) aufweist und der sich radial nach außen erstreckende Abschnitt zumindest einen Teil eines U-förmigen Abschnitts (20) der Rastspange (10) ausbildet, der die Klemmabschnitte (19) federelastisch verbindet.

7. Spannsystem nach Anspruch 6,
**dadurch gekennzeichnet, dass** der U-förmige Abschnitt (20) der Rastspange (10) mindestens einen abgewinkelten Teil (21) und das Gehäuse (3) mindestens einen von der Gehäusewandung vorstehenden Führungsvorsprung (22) aufweist, wobei der Führungsvorsprung (22) den abgewinkelten Teil (21) des U-förmigen Abschnitts (20) der Rastspange (10) im Arbeitsbereich des Spannkolbens (4) axial führt und gegen ein Verdrehen sichert.

8. Spannsystem nach Anspruch 7,
**dadurch gekennzeichnet, dass** der Führungsvorsprung (22) zumindest teilweise zwischen den parallelen Schenkeln des abgewinkelten Teils (21) des U-förmigen Abschnitts (20) der Rastspange (10) angeordnet ist, wobei der Führungsvorsprung (22) an seinem rückwärtigen Ende einen Anschlag (24) ausbildet, der die axiale Bewegung der Rastspange (10) in der Ausrückrichtung des Spannkolbens (4) begrenzt.

9. Spannsystem nach einem der Ansprüche 1 bis 8,
**dadurch gekennzeichnet, dass** die Rastspange (10) aus einem Runddraht hergestellt ist.

10. Spannsystem nach einem der Ansprüche 1 bis 9,
**dadurch gekennzeichnet, dass** die Rastprofilierung (7) am Spannkolben (4) als Rillenprofil mit mehreren Rastrillen (17), bevorzugt mit umlaufenden Rastrillen (17) ausgebildet ist.

11. Spannsystem nach Anspruch 10,
**dadurch gekennzeichnet, dass** die Rastrillen (17) beidseitig geneigte Flanken aufweisen, wobei mittels der beidseitig geneigten Flanken das Aufspreizen der Rastspange (10) durch die Rastprofilierung (7) am Spannkolben (4) beim Nachstellen des Arbeitsbereichs des Spannkolbens (4) und beim Rückstellen des Spannkolbens (4) ermöglicht ist.

12. Spannsystem nach einem der Ansprüche 1 bis 11,
**dadurch gekennzeichnet, dass** eine Transportsicherung (13) mit einem Sicherungsbolzen (15) vorgesehen ist, wobei am Gehäuse (3) mindestens eine Bolzenaufnahme (14) vorgesehen ist, in der der Sicherungsbolzen (15) aufnehmbar ist um den Spannkolben (4) in einer Transportstellung zu halten.

13. Spannsystem nach Anspruch 12,
**dadurch gekennzeichnet, dass** der Sicherungsbolzen (15) als Rückstellelement (28) einsetzbar ist.

## Claims

1. A tensioning system with resetting for tensioning a flexible drive means, in particular a drive chain of an internal-combustion engine, comprising a tensioning apparatus (1) and a resetting device (2), the tensioning apparatus (1) comprises a housing (3), a tensioning piston (4) slidably guided in the housing (3) in the tensioning direction, with a detent profile (7) and a detent bracket (10) for the stepwise adjustment of the working stroke of the tensioning piston (4), wherein the detent bracket (10) has a clamping section (18) for engagement in the detent profile (7) on the tensioning piston (4), and wherein an inward-movement stop member (26) is provided on the housing (3) such that in the event of abutment of the detent bracket (10) by means of clamping of the clamping section (18) on the detent profile (7) further inward movement of the tensioning piston (4) into the housing (3) is prevented,
**characterised in that** a resetting receptacle (29) is formed on the housing (3) of the tensioning apparatus (1) and the resetting device (2) has a resetting element (28) which can be brought into operative relationship with the tensioning apparatus (1), wherein the resetting element (28) positioned in the resetting receptacle (29) between the resetting receptacle (29) and detent bracket (10) prevents the abutment of the detent bracket (10) on the inward-movement stop member (26) and, upon application of the detent bracket (10) against the resetting element (28) and also with a further inward movement of the tensioning piston (4) into the housing (3), the resetting element (28) makes possible automatic spreading apart of the clamping section (18) and resetting of the tensioning piston (4).

2. A tensioning system according to Claim 1,
**characterised in** the detent profile (7) on the tensioning piston (4) is so formed that automatic spreading apart of the clamping section (18) is possible upon resetting of the tensioning piston (4).

3. A tensioning system according to Claim 1 or 2,
**characterised in that** the resetting receptacle (29) has a supporting surface and a locating projection protruding with respect to the supporting surface.

4. A tensioning system according to any one of Claims 1 to 3,
**characterised in that** resetting element (28) is formed pin-like and at least partly complementary to the resetting receptacle (29).

5. A tensioning system according to any one of Claims 1 to 4,
**characterised in that** the detent bracket (10) has a portion extending outwards radially from the tensioning piston (4), wherein upon resetting of the tensioning piston (4) the outwardly extending portion of the detent bracket (10) abuts against the resetting element (28) and with a further inward movement of the tensioning piston (4) makes possible spreading apart of the clamping section (18).

6. A tensioning system according to Claim 5,
**characterised in that** the clamping section (18) of the detent bracket (10) has two clamping portions (19) and the outwardly extending portion forms at least one part of a U-shaped portion (20) of the detent bracket (10), which connects the clamping portions (19) in a resilient manner.

7. A tensioning system according to Claim 6,
**characterised in that** the U-shaped portion (20) of the detent bracket (10) has at least one angular part (21) and the housing (3) has at least one guide projection (22) protruding from the housing wall, wherein the guide projection (22) axially guides the angular part (21) of the U-shaped portion (20) of the detent bracket (10) in the working stroke of the tensioning piston (4) and protects it from torsion.

8. A tensioning system according to Claim 7,
**characterised in that** the guide projection (22) is arranged at least partly between the parallel legs of the angular part (21) of the U-shaped portion (20) of the detent bracket (10), wherein at its rear end the guide projection (22) forms a stop member (24) which limits the axial movement of the detent bracket (10) in the release direction of the tensioning piston (4).

9. A tensioning system according to any one of Claims 1 to 8,
**characterised in that** the detent bracket (10) is produced from round wire.

10. A tensioning system according to any one of Claims 1 to 9,
**characterised in that** the detent profile (7) on the tensioning piston (4) is in the form of a grooved profile with a plurality of detent grooves (17), preferably with circumferential detent grooves (17).

11. A tensioning system according to Claim 10,
**characterised in that** the detent grooves (17) have flanks inclined on both sides, wherein the flanks inclined on both sides make possible the spreading apart of the detent bracket (10) by the detent profile (7) on the tensioning piston (4) during adjustment of the working stroke of the tensioning piston (4) and upon resetting the tensioning piston (4).

12. A tensioning system according to any one of Claims 1 to 11,
**characterised in that** a transport locking device (13) with a locking pin (15) is provided, wherein at least one pin receptacle (14) is provided on the housing (3), which can accommodate the locking pin (15) so as to maintain the tensioning piston (4) in a transport position.

13. A tensioning system according to Claim 12,
**characterised in that** the locking pin (15) can be used as resetting element (28).

## Revendications

1. Système de serrage doté d'un retour pour serrer un moyen d'entraînement flexible, en particulier une chaîne d'entraînement d'un moteur à combustion interne, constitué d'un dispositif de serrage (1) et d'un dispositif de retour (2), le dispositif de serrage (1) comprenant un boîtier (3), un piston de serrage (4) guidé pour coulisser dans le boîtier (3) selon la direction de serrage avec un profilage d'engagement (7) et un collier d'engagement (10) pour régler graduellement la plage de travail du piston de serrage (4), dans lequel le collier d'engagement (10) comporte une zone de pinçage (18) qui s'engage avec le profilage d'engagement (7) du piston de serrage (4), et dans lequel une butée d'entrée (26) est constituée dans le boîtier (3) de telle sorte que lors d'une prise du collier d'engagement (10) grâce à un pinçage de la zone de pinçage (18) sur le profilage d'engagement (7), un déplacement d'entrée additionnel du piston de serrage (4) dans le boîtier (3) est arrêté,
**caractérisé en ce qu'**un logement de retour (29) est constitué dans le boîtier (3) du dispositif de serrage (1) et **en ce que** le dispositif de retour (2) comporte un élément de retour (28) qui peut être mis en interaction avec le dispositif de serrage (1), moyennant quoi l'élément de retour (28) positionné dans le logement de retour (29) entre le logement de retour (29) et le collier d'engagement (10) empêche un choc du collier d'engagement (10) contre la butée d'entrée (26), et l'élément de retour (28), lors d'un contact du collier d'engagement (10) avec l'élément de retour (28) ainsi que lors d'un déplacement d'entrée additionnel du piston de serrage (4) dans le boîtier (3), permet un écartement automatique de la zone de pinçage (18) et un retour du piston de serrage (4).

2. Système de serrage selon la revendication 1,
**caractérisé en ce que** le profilage d'engagement (7) du piston de serrage (4) est constitué de telle sorte que l'écartement automatique de la zone de pinçage (18) est rendu possible lors d'un retour du piston de serrage (4).

3. Système de serrage selon la revendication 1 ou 2,
**caractérisé en ce que** le logement de retour (29) comporte une surface d'appui et une protubérance de protection opposée à la surface d'appui.

4. Système de serrage selon l'une des revendications 1 à 3,
**caractérisé en ce que** l'élément de retour (28) est constitué sous forme d'un goujon et est au moins partiellement complémentaire avec le logement de retour (29).

5. Système de serrage selon l'une des revendications 1 à 4,
**caractérisé en ce que** le collier d'engagement (10) comporte une section qui s'étend radialement vers l'extérieur à partir du piston de serrage (4), moyennant quoi la section du collier d'engagement (10) qui s'étend vers l'extérieur s'appuie contre l'élément de retour (28) lors d'un retour du piston de serrage (4) et permet un écartement de la zone de pinçage (18) lors d'un déplacement d'entrée additionnel du piston de serrage (4).

6. Système de serrage selon la revendication 5,
**caractérisé en ce que** la zone de pinçage (18) du collier d'engagement (10) comporte deux sections de pinçage (19) et **en ce que** la section qui s'étend radialement vers l'extérieur constitue au moins une partie d'une section en forme de U (20) du collier d'engagement (10) qui accouple la section de pinçage (19) avec une force de ressort élastique.

7. Système de serrage selon la revendication 6,
**caractérisé en ce que** la section en forme de U (20) du collier d'engagement (10) comporte au moins une partie présentant un angle (21) et le boîtier (3) comporte au moins une projection de guidage qui fait saillie de la paroi du boîtier (22), moyennant quoi la projection de guidage (22) de la partie présentant un angle (21) de la section en forme de. U (20) du collier d'engagement (10) guide le piston de serrage (4) axialement dans la plage de travail et empêche sa rotation.

8. Système de serrage selon la revendication 7,
**caractérisé en ce que** la projection de guidage (22) est agencée au moins en partie entre les pattes parallèles de la partie présentant un angle (21) de la section en forme de U (20) du collier d'engagement (10), moyennant quoi la projection de guidage (22) constitue à son extrémité postérieure une butée (24) qui limite le déplacement axial du collier d'engagement (10) en direction de désengagement du piston de serrage (4).

9. Système de serrage selon l'une des revendications 1 à 8,
**caractérisé en ce que** le collier d'engagement (10) est fabriqué à partir d'un fil rond.

10. Système de serrage selon l'une des revendications 1 à 9,
**caractérisé en ce que** le profilage d'engagement (7) sur le piston de serrage (4) est constitué comme un profil cannelé avec plusieurs cannelures d'engagement (17), et de préférence avec des cannelures d'engagement circonférentielles (17).

11. Système de serrage selon la revendication 10,
**caractérisé en ce que** les cannelures d'engagement (17) comportent sur leurs deux côtés des flancs inclinés, moyennant quoi les flancs inclinés des deux côtés permettent un écartement du collier d'engagement (10) grâce au profilage d'engagement (7) sur le piston de serrage (4) lors du réglage de la plage de travail du piston de serrage (4) et lors du retour du piston de serrage (4).

12. Système de serrage selon l'une des revendications 1 à 11,
**caractérisé en ce qu'**un verrouillage de transport (13) est pourvu à l'aide d'un goujon de verrouillage (15), dans lequel au moins un logement de goujon (14) est pourvu sur le boîtier (3), où le goujon de verrouillage (15) peut être logé pour maintenir le piston de serrage (4) dans une position de transport.

13. Système de serrage selon la revendication 12,
**caractérisé en ce que** le goujon de verrouillage (15) peut être utilisé comme élément de retour (28).
